# EUROPEAN PATENT APPLICATION

(11) **EP 1 707 989 A1**
(43) Date of publication of application: **04.10.2006**
(21) Application number: 05703358.1
(22) Date of filing: 07.01.2005
(51) Int. Cl.: G01T 1/18, H01J 47/14

(54) **PARTICLE DETECTION DEVICE AND PARTICLE DETECTION METHOD**

(30) Priority: 09.01.2004 US 535208 P; 26.02.2004 JP 2004050869
(71) Applicant: Takahashi, Hiroyuki, Bunkyo-ku Tokyo 113-0023 (JP); Kai, Masayoshi, 6-chome, Bunkyo-ku Tokyo 113-0033 (JP)
(72) Inventor: Takahashi, Hiroyuki, Bunkyo-ku Tokyo 113-0023 (JP); Kai, Masayoshi, 6-chome, Bunkyo-ku Tokyo 113-0033 (JP)
(74) Representative: Reitstötter - Kinzebach
(86) International application number: PCT/JP2005/000090
(87) International publication number: WO 2005/066657

(57) **Abstract**

Electrodes for detecting the position of an incident particle are formed by a global position detection electrode for detecting the global position of the incident particle and a plurality of local position detection electrodes for detecting the local position of the incident particle. The position of the incident particle is identified from the global position information detected by the global position detection electrode and the local position information detected by the local position detection electrodes. A plurality of local position detection electrodes are divided into a plurality of groups and local position detection electrodes belonging to each group are connected to a common signal line. A predetermined number of local position detection electrodes correspond to one global position and the predetermined number of local position detection electrodes corresponding to one global position belong to different groups.

## Description

### TECHNICAL FIELD

The present invention relates to a particle detector and a method for detecting position of particles. In this specification, the present invention is described mainly based on a microstrip gas chamber (MSGC) that is one preferred type of particle detector, but application of the present invention is not limited to an MSGC and it can also be applied to other particle detectors.

### BACKGROUND ART

An MSGC is a gas proportional counter capable of position detection. An MSGC is formed by providing an MS plate produced using photolithography technique, for example, inside a gas chamber. The MS plate is formed by arranging anode electrodes and cathode electrodes on an insulating substrate such as a glass substrate, alternately at intervals of a few hundred micrometers. Primary electrons generated by incident radiation are amplified by electron avalanche, and positional measurement of incident radiation is carried out by reading out a signal using the electrodes.

In order to increase the positional resolution of a radiation detector, many signals lines are required, but particularly in the case of operation in a high pressure gas chamber, such as a neutron MSGC, there is a problem of signal extraction. A high voltage of about 2,000V is applied to the surface of the MSGC. That is, it is difficult that signals with cathode potential run on the rear surface of the anodes, and this places a significant restriction on the wiring. For example, if the pad width of the cathodes is made about 250 µm, it can be considered that the number of wires that can be taken out from the cathode would be about 25 with normal technology, which is not practical.

With a conventional MSGC, in order to acquire two-dimensional information, it is necessary to install read-out electrodes on the rear surface of a glass substrate of the MS plate, and read out induced charge from the glass substrate rear surface. This case requires a thin glass substrate in order to suppress spreading of the induced charge and acquire large signals, and manufacturing a substrate with a large surface area from a thin glass substrate is difficult. Accordingly, studies have been carried out to adopt a thick substrate by performing position detection using a signal from a cathode, but the problem of number of signal lines is not resolved.

Also, if the number of signal lines is large, the scale of the electronics for processing them becomes large (for example, a lot of signal amplifiers are required), there are drawbacks that the structure of processing sections becomes complicated and large and cost of the device overall is increased, which is not a characteristic of an MSGC, but is a problem that particle detectors generally have.

Also, in particle detectors including an MSGC, a charge division method is known as a position detection method. However, with the charge division method, if the effective sensing area of the position detector becomes large, image distortion at the ends becomes prominent, and there is a disadvantage that position resolution is degraded.
Patent Publication 1: International Publication No. WO02/001598

An object of the present invention is to reduce the number of signal read lines by improving the structure of detector electrodes.

Another object of the present invention is to enable high resolution images without distortion, even if an effective sensing area of the detector becomes large.

### DISCLOSURE OF THE INVENTION

The present invention relates a particle detector comprising electrodes for detecting position of incident particles. The electrodes comprise one or more global position detection electrodes for detecting global position of incident particles, and a plurality of local position detection electrodes for detecting local position of incident particles. The local position within the global position is determined by combining the global position information detected from the global position detection and the local position information detected from the local position detection electrodes. The present invention also relates to a method of detecting position of incident particles using electrodes. The method includes providing electrodes comprising of one or more global position detection electrodes for detecting global position of incident particles and a plurality of local position detection electrodes for detecting local position of incident particles, and determining the local position within the global position by combining the global position information detected from the global position detection electrodes and the local position information detected from the local position detection electrodes.

Global position and local position are relative, with the one having a lower precision of detected position (detected as a more global position) being global position, and the one with higher precision of detected position (detected as a more local position) being local position. Electrodes (global position detection electrodes and local position detection electrodes) for detecting incident position of particles are constructed and arranged such that the same signals are acquired at the same time. Local position detection electrodes and global position detection electrodes are electrically connected to local position detection signal lines and global position detection signal lines respectively. In one preferred aspect, the local position detection electrodes are divided into a plurality of groups, and local position detection electrodes belonging to respective groups are connected to common signal lines. Also, similarly, in a case where sets of global position detection electrodes comprised of a plurality of global position detection electrodes are repeatedly arranged, the global position detection electrodes forming respective sets of global position detection electrodes are divided into a plurality of groups, and it is possible to reduce the number of signal lines by connecting global position detection electrodes belonging to respective groups to common signal lines.

According to one preferred aspect, a series of a predetermined number of local position detection electrodes correspond to a single global position, and each of the predetermined number of local position detection electrodes corresponding to one global position belong to a different group respectively. According to a further preferred aspect, the predetermined number of local position detection electrodes constitute one period, and local position detection electrodes are formed by repeatedly arranging the predetermined number of local position detection electrodes.

According to one preferred aspect, local position detection electrodes, and/or detection electrodes comprise a plurality of pad electrodes. In one preferred aspect, local position detection electrodes are cathodes and comprise a plurality of local position detection pad electrodes. In a preferred aspect, the particle detector comprises an elongated anode, and the pad electrodes form an array of pads arranged in series along a lengthwise direction of the anode. As one aspect of a pad array, pad arrays are respectively arranged on both sides of the anode, with the dimensions of pad electrodes of the pad array of one side being smaller than the pad electrodes of the pad array of the other side. At least the pad electrodes of the pad array of one side constitute local position detection electrodes, respective pad electrodes constituting the local position detection electrodes are divided into a plurality of groups, and pad electrodes belonging to the same group are connected to respective common signal read lines.

In the relationship between a pad array and global position detection electrodes and local position detection electrodes, there are the following features. According to one aspect, pad electrodes forming pad arrays arranged on both sides of an anode constitute local position detection electrodes. According to another aspect, pad electrodes forming a pad array of one side constitute local position detection electrodes, and pad electrodes forming a pad array of the other side constitute global position detection electrodes. In the latter case, with one aspect, a plurality of pad electrodes forming the pad array constituting the local position detection electrodes are arranged periodically along the lengthwise direction of the anode, and the size of one period corresponds to the size of one pad electrode constituting the global position detection electrodes.

According to one aspect, the global position is acquired using a charge division method. In this case, with one aspect, the global position detection electrode is an anode.

The global position detection electrodes and the local position detection electrodes of the present invention also adopt the following structure. Electrodes for detecting position of particles comprise a plurality of elongated electrodes, the plurality of elongated electrodes are arranged parallel to each other so as to detect position in a direction orthogonal to an lengthwise direction of the elongated electrodes, each elongated electrode of the plurality of elongated electrodes further comprises a set of a plurality of fine electrodes, the plurality of fine electrodes acquire the same signals at the same time, at least one fine electrode of the set of fine electrodes constitutes a global position detection electrode, and at least one fine electrode of the set of fine electrodes constitute a local position detection electrode. According to a preferred aspect, the elongated electrodes are anodes, and each anode comprises a plurality of split anodes extending parallel and adjacent to each other, at least one of the plurality of split anodes constitutes a global position detection electrode, and at least one of the plurality of split anodes constitutes a local position detection electrode. In this way, position detection by combining global position detection electrodes and local position detection electrodes of the present invention can also be applied not only to cathodes but also to anodes.

An MSGC exemplifies a preferred aspect of a particle detector of the present invention. One aspect is directed to a microstrip gas chamber comprising a gas volume, an electrically insulating substrate provided with a surface facing the gas volume, cathodes and anodes alternately arranged on the surface of the substrate, and a high voltage source for creating a potential difference between the cathodes and the anodes, wherein the cathodes arranged on both sides of the anode are pad arrays comprising a plurality of pad electrodes arranged along a lengthwise direction of the anodes, one of the pad arrays comprises a plurality of elongated pad electrodes and each elongated pad electrode is connected to a read signal line, the other of the pad arrays comprises a plurality of shortened pad electrodes and the plurality of shortened pad electrodes are divided into a plurality of groups, with pad electrodes belonging to the same group being connected to respective common read signal lines, and the position of incident particle is determined from signals read out by the elongated pad electrodes and the shortened pad electrodes.

Another aspect is directed to a microstrip gas chamber comprising a gas volume, an electrically insulating substrate provided with a surface facing the gas volume, cathodes and anodes alternately arranged on the surface of the substrate, and a high voltage source for creating a potential difference between the cathodes and the anodes, wherein each anode comprises a plurality of fine or thin anodes extending parallel and adjacent to each other, with at least one of the fine anodes of the plurality of fine anodes of respective anodes being divided into a plurality of groups, fine anodes belonging to the same group being connected to a common local position read signal line, at least one fine anode of the plurality of fine anodes of respective anodes being connected to a common global position read signal line, and position of incident particles is determined using read signals acquired from the local position read signal line and the global position read signal line.

According to another aspect of the present invention, position detection electrodes comprise a multi-layer wiring structure having one or more metallic layers constituting electrodes, an insulation layer below the metallic layers, and a metallic wiring layer below the insulation layer. The metallic wiring layer comprises a plurality of read out signal lines, and the one or more metallic layers constituting the electrodes are electrically connected to selected read-out signal lines. Preferably, the electrodes are local position detection electrodes. With one aspect of a preferred exemplification, the local position detection electrodes are cathodes, and the metallic layers constituting electrodes are pad electrodes.

Further, with another aspect of the present invention, global position and local position are detected using signals from the cathodes only, and position of incident particles is determined from the detected global position and local position. Specifically, according to cathodes provided on both sides of an anode, one of the cathodes constitutes global position detection electrodes, and the other of the cathodes constitutes local position detection electrodes. As one form of these electrodes, the one cathode comprises a plurality of elongated pad electrodes constituting global position detection electrodes while the other cathode comprises a plurality of shortened pad electrodes constituting local position detection electrodes, with a predetermined number of shortened pad electrodes corresponding to one elongated pad electrode. The following are two examples of means for reading out global position and local position. According to the first means, a predetermined number of shortened pad electrodes corresponding to one elongated pad electrode belong to respective different groups, shortened pad electrodes belonging to the same group are connected to common signal lines, a plurality of elongated pad electrodes are divided into a plurality of groups, and elongated pad electrodes belonging to the same group are connected to common signal lines. According to the second means, a plurality of elongated pads have the same dimension and are connected to a common resistance line so as to determine global position using a charge division method, and said predetermined number of shortened pad electrodes corresponding to one elongated pad electrode have the same dimension and are connected to a common resistance line so as to determine local position using a charge division method.

With these other aspects of the electrodes, each cathode is electrically divided into a first section and a second section respectively comprising a plurality of teeth, teeth of the first section and teeth of the second section are arranged in series alternately in a lengthwise direction of the anode, and local position and global position are respectively determined using a charge division method based on surface area ratio between adjoining first section tooth and second section tooth. With respect to the basic theory of charge division method utilizing surface area ratios between electrodes that are electrically divided, reference may be made to a backgammon system and a wedge and strip method. Preferably, adjoining first section tooth and second section tooth constitute a pair of teeth, one global position detection electrode comprises a plurality of teeth pairs, each teeth pair constituting the same global position have the same surface area ratio, and teeth pairs constituting different global positions have respective different surface area ratios. Adjoining first section tooth and second section tooth constitute a pair of teeth, a local position detection electrode comprises one teeth pair, a predetermined number of teeth pairs correspond to one global position, and a predetermined number of teeth pairs corresponding to one global position have respective different surface area ratios. Surface area ratios of a predetermined number of teeth pairs corresponding to one global position are configured to gradually increase or decrease along a lengthwise direction of the anode within the global position.

According to the present invention, it is possible to reduce the number of read-out signal lines by using global position information and local position information. For example, in an MSGC, it is possible to manage with hard-wiring of only about 20 - 25 beneath each cathode pad. This is an outstanding advancement compared to detectors of the related art. For example, in an MSGC, if the total number of strips is made N, the effect of reduction of number of signal lines due to combination of global position information and local position information becomes a maximum of 2/√N. For example, ifN = 625, it will becomes 1/10 or less.

Also, by forming an electrode (for example, a cathode electrode) from a plurality of pad electrodes or a plurality of teeth pairs, each pad electrode or one or more teeth pairs define a so-called pixel, and even if the effective sensing area of the detector is large, high resolution imaging without distortion becomes possible.

### BRIEF DESCRIPTION OF THE DRAWINGS

Fig. 1 is a schematic plan view of an MS plate for an MSGC;
Fig. 2 is a schematic view describing the principle of an MSGC;
Fig. 3 is a schematic perspective view of an MS tube;
Fig. 4 is a view describing one-dimensional position detection of particles relating to the present invention;
Fig. 5 is a view describing one-dimensional position detection of particles relating to the present invention;
Fig. 6 is a table for describing position detection of particles using an electrode pattern;
Fig. 7 is a view partially showing an MS plate for one-dimensional position detection;
Fig. 8 is a view describing two-dimensional position detection of particles relating to the present invention;
Fig. 9 is a view describing Y-direction position detection in two-dimensional position detection of particles relating to the present invention;
Fig. 10 is a view describing X-direction position detection in two-dimensional position detection of particles relating to the present invention;
Fig. 11 is a cross sectional drawing showing an example of an MS plate relating to the present invention;
Fig. 12 is a view describing Y-direction position detection in two-dimensional position detection of particles relating to the present invention;
Fig. 13 is a view describing X-direction position detection in two-dimensional position detection of particles relating to the present invention;
Fig. 14 is a schematic view showing a system for two-dimensional position detection of particles relating to the present invention;
Fig. 15 is a view showing a first embodiment of position detection using cathodes; and
Fig. 16 is a view showing a second embodiment of position detection using cathodes.

### PREFERRED MODE FOR CARRYING OUT THE INVENTION

### [A] MSGC

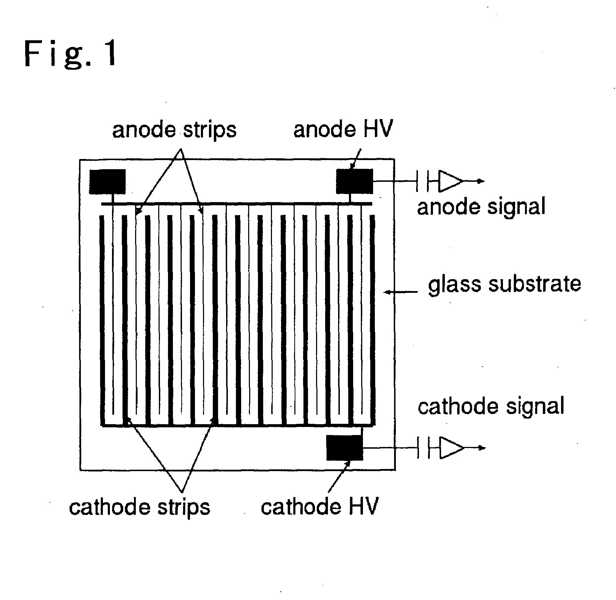

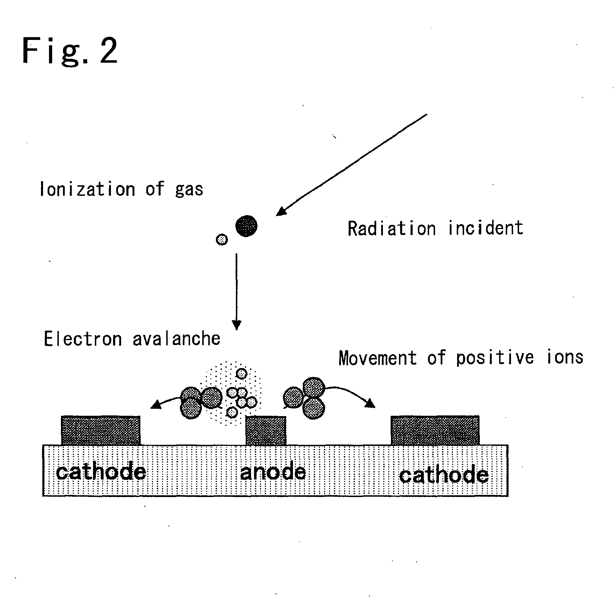

First of all, an MSGC that is one preferred radiation detector to which the present invention is applied will be briefly described based on Fig. 1 and Fig. 2. Fig. 1 is a schematic plan view of an MS plate (microstrip plate), and the MS plate has an insulating substrate formed from quartz glass, for example, and cathodes and anodes formed from chrome strips, for example, provided alternately parallel to each other on a surface of the substrate. One or more strip-shaped grids may be provided between the anodes and the cathodes. A predetermined voltage (in a preferred example, a voltage having a value between a cathode voltage and an anode voltage) is preferably applied to the grid. Advantages of providing grids are disclosed in USP 09/773,666 and International Publication No. WO02/001598.

The MS plate constitutes an MSGC by being arranged inside a chamber into which gas is introduced, and is preferably used as an X-ray or particle beam image detector. Together with introduction of gas into the chamber, a high voltage is applied across the cathode and anode to cause electron amplification of the gas, and a particle beam signal is extracted from the anode and/or cathode. The cathode and anode constituting the MS plate are respectively connected to signal detection circuits, and the signals are subjected to analysis processing by a computer. Circuits for reading out signals acquired by each electrode and detecting position are known to those skilled in the art.

### [B] One dimensional position measurement.

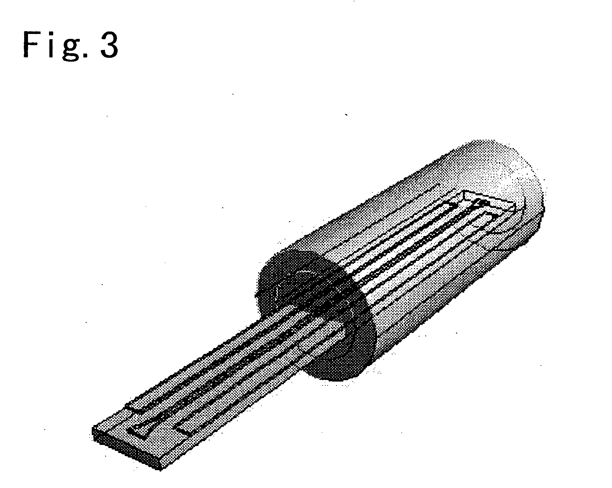

Description will now be given of one-dimensional position detection measurement for particles using the present invention. Fig. 3 is a perspective view of an MS tube (microstrip tube). The MS tube being one type of MSGC comprises an MS plate and a tube housing the MS plate. The MS plate comprises a substrate, an anode arranged on the substrate, and cathodes arranged on both sides of the anode. In this specification, the definition of MSGC includes an MS tube.

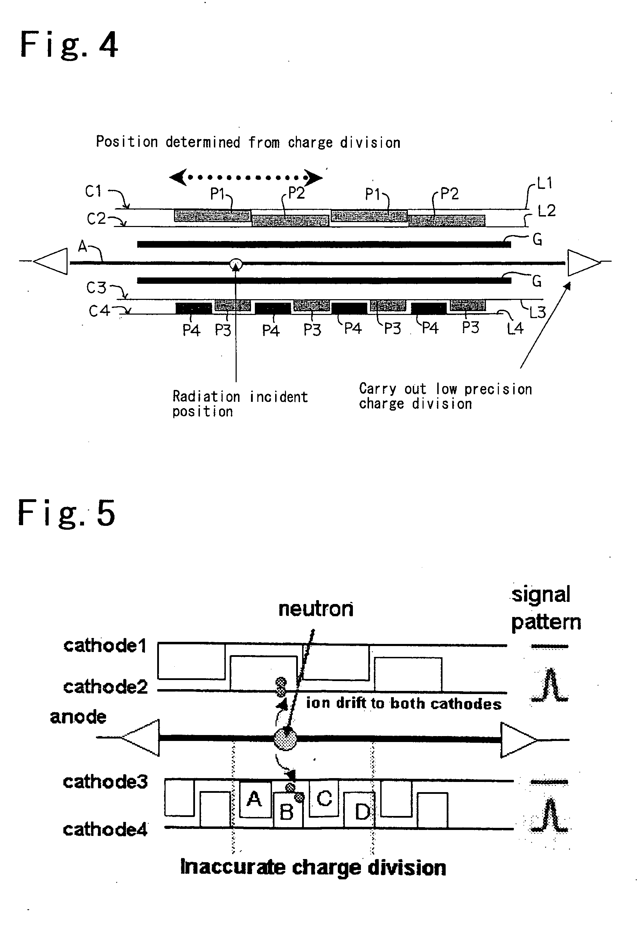

The principal behind the particle one-dimensional position information acquisition method using the MS tube will be described based on Fig. 4. Fig. 4 is a schematic diagram showing electrodes arranged on the substrate, with an anode strip A arranged on the substrate. Cathodes are arranged on both sides of the anode strip A, but the cathodes are pad arrays comprised of a plurality of pad electrodes arranged in series along a lengthwise direction of the anode strip A. The pad electrodes are formed by dividing a conventional cathode strip in the lengthwise direction every predetermined dimension. Also, the pad electrodes forming a pad array are divided into a plurality of groups. In the drawing, respective pad electrodes are divided into two groups. A strip shaped grid G extending parallel to the pad array and anode strip A is arranged between the pad array and the anode strip A.

Specifically, the pad array constituting one cathode of the cathodes on both sides of the anode strip A comprises a set of two pad electrode groups, pad electrode group C 1 and pad electrode group C2. The pad electrode group C1 comprises a plurality of pad electrodes P1, and the plurality of pad electrodes P1 are connected to a common signal line L1. The pad electrode group C2 comprises a plurality of pad electrodes P2, and the plurality of pad electrodes P2 are connected to a common signal line L2. The pad electrodes P1 and the pad electrodes P2 are alternately arranged in the lengthwise direction of the anode strip A. In the drawing, the pad electrodes P1 and the pad electrodes P2 have the same dimensions.

The pad array constituting the other cathode comprises a set of two pad electrode groups, pad electrode group C3 and pad electrode group C4. The pad electrode group C3 comprises a plurality of pad electrodes P3, and the plurality of pad electrodes P3 are connected to a common signal line L3. The pad electrode group C4 comprises a plurality of pad electrodes P4, and the plurality of pad electrodes P4 are connected to a common signal line L4. The pad electrodes P3 and the pad electrodes P4 are alternately arranged in the lengthwise direction of the anode strip A. In the drawing, the pad electrodes P3 and the pad electrodes P4 have the same dimensions. The dimensions of the pad electrodes P3 and the pad electrodes P4 (in the lengthwise direction of the anode strip A) is half the dimensions of the pad electrodes P1 and the pad electrodes P2 (in the lengthwise direction of the anode strip A). That is, the pad electrodes P1 and pad electrodes P2 constitute an elongated pad electrode, while the pad electrodes P3 and the pad electrodes P4 constitute a shortened electrode. These pad electrodes are electrodes for detecting local position information for a position where radiation is incident.

Global position information for the position where radiation is incident is acquired by the anode strip A using a charge division method. In the drawing, global position information acquired by the anode strip A is equivalent to about twice the dimensions of the pad electrodes P1 and P2. Also, global position information acquired by the anode strip A is equivalent to about four times the dimensions of the pad electrodes P3 and P4. Specifically, the anode strip A constitutes a global position detection electrode, while the plurality of pad electrodes P1, P2, P3 and P4 constitute local position detection electrodes.

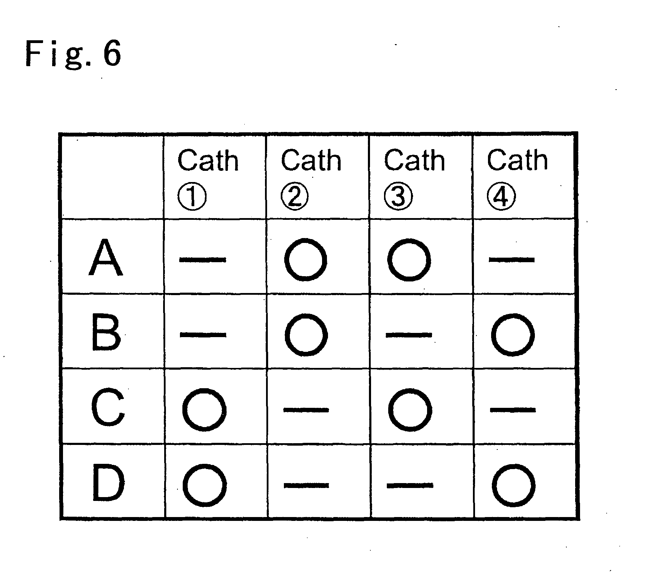

Determination of radiation incident position using these electrodes will be described based on Fig. 5 and Fig. 6. Fig. 5 is similar to Fig. 4, with the pad electrode group C1 corresponding to cathode 1, the pad electrode group C2 corresponding to cathode 2, the pad electrode group C3 corresponding to cathode 3, and the pad electrode group C4 corresponding to cathode 4. A pad array comprising the cathodes 1 and 2, and a pad array comprising the cathodes 3 and 4 correspond to a conventional cathode strip. The grid G is not shown in Fig. 5.

A charge division method is applied to signals acquired from the ends of anode, and position information is obtained at a precision of about one period of a cathode electrode pattern. In the drawing, radiation incident position information (global position information) is obtained by the anode at a precision equivalent to two pad electrodes of the cathodes 1 and 2 and four of the pad electrodes of the cathodes 3 and 4. Here, global position information corresponds to one period (two pad electrodes) of the pad arrays of the cathodes 1 and 2. The dimensions of the pad electrodes constituting pad arrays of the cathodes 1 and 2 correspond to one period (two pad electrodes) of the pad array of the cathodes 3 and 4. If only the relationship between cathodes 1 and 2 and the cathodes 3 and 4 is considered, it can be said that the information acquired from the cathodes 1 and 2 is global information and the information acquired from the cathodes 3 and 4 is local information. With this meaning, it can also be said that the cathodes 1 and 2 are local position detection electrodes, while at the same time being quasi-global position detection electrodes.

Positive ions generated by the occurrence of electron avalanche due to incident radiation move to the pad arrays comprised of the cathodes 1 and 2 (pad electrode group) and the pad arrays comprised of the cathodes 3 and 4 (pad electrode group) on either side of the anode. Since signals of the cathodes (pad electrodes) of pad arrays are divided on either side of one anode, it is possible to carry out position detection using two signals generated at the same time. Two pieces of local position information are acquired using the pad electrodes. Local position information (incident position of radiation) within the global position information is determined by combining global position information acquired by the anode and two pieces of local position information.

Detection of incident position of radiation will now be described using the table of Fig. 6. First of all, global position information in a range equivalent to two pad electrodes of the pad arrays of the cathodes 1 and 2 and four pad electrodes of the pad arrays of the cathodes 3 and 4 are acquired using global position information acquired by the anode using a charge division method. At this time, if specified signal patterns are simultaneously detected from the signal line of the cathode 2 and the signal line of the cathode 3, the position of A is determined. Similarly, if specified signal patterns are simultaneously detected from the signal line of the cathode 2 and the signal line of the cathode 4, the position of B is determined, if specified signal patterns are simultaneously detected from the signal line of the cathode 1 and the signal line of the cathode 3, the position of C is determined, and if specified signal patterns are simultaneously detected from the signal line of the cathode 1 and the signal line of the cathode 4, the position of D is determined.

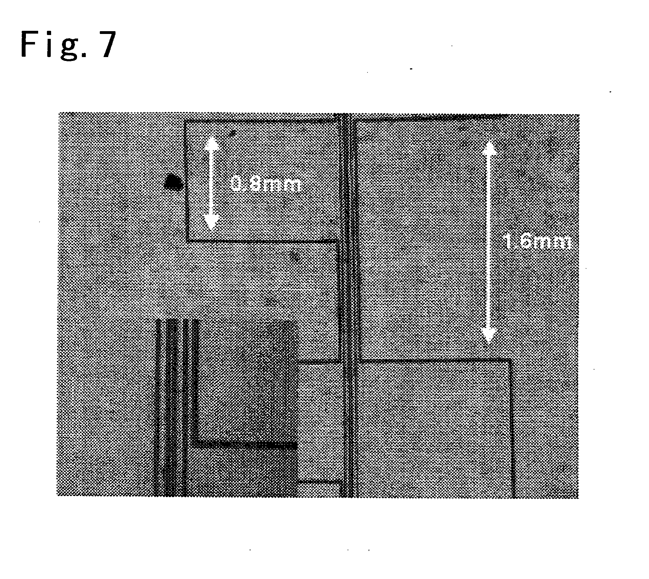

Fig. 4 and Fig. 5 show the anode used as a global position detection electrode and two cathode pad arrays (each pad array is respectively comprised of two pad electrode groups) as local position detection electrodes, but it is possible to determine position using other combinations of electrodes, by appropriately changing the structure, such as the number and dimensions of pad electrodes. According to the example described above, global information is acquired from anode signals, but it is also possible to acquire global information from one cathode signal and acquire local information from the other cathode signal, without using the anode signal. It is also possible to acquire global information from the anode signal and acquire local information from the cathode signal of only one pad array. Fig. 7 is a partial plan view of an MS plate for one-dimensional position detection, and with this example the cathode has a single-layered structure and wiring for connecting to the pad electrodes extends within the same plane as the cathode electrode sections. Incidentally, it is also possible to perform two-dimensional position detection by arranging a plurality of elongated one-dimensional position detection units made up of from one to a plurality of electrode groups (sets of anodes and cathodes) in a direction orthogonal to a lengthwise direction of the one-dimensional position detection units. It is also possible to construct a large scale two-dimensional position detector by arranging a plurality of elongated one-dimensional position detection units.

### [C] Two dimensional position measurement.

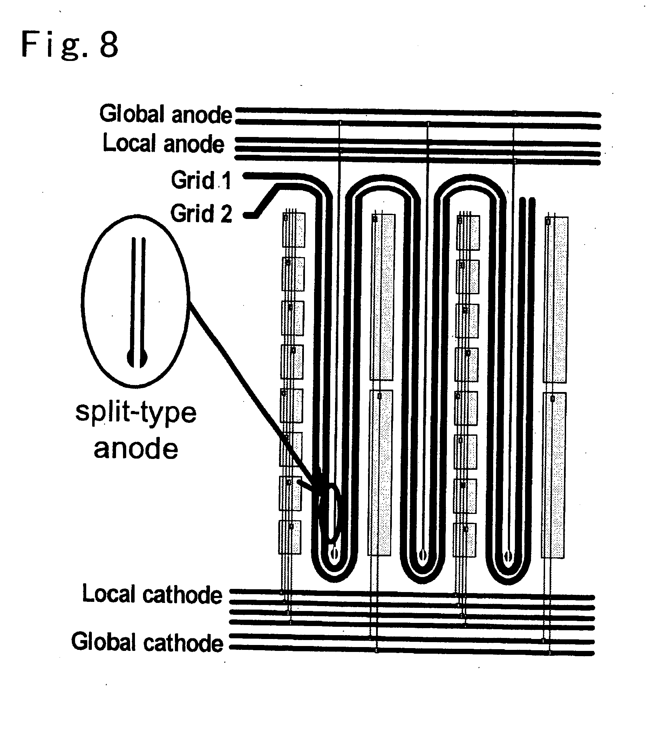

Description will now be given of two-dimensional position detection measurement for particles using the present invention. The present invention is applied to an M-MSGC (multi-grid type MSGC). Fig. 8 is a schematic diagram showing electrodes arranged on a substrate of an MS plate constituting an MSGC. Similarly to a conventional MSGC, a plurality of anodes and cathodes are alternately arranged on the substrate, and a strip-shaped grid extends between the anodes and the cathodes. The anodes are the same as conventional anodes with regard to the strip-shape, but the anodes are divided into two in the vertical direction, and each anode is comprised of two fine or thin split anodes. The cathodes are constructed from pad arrays comprised of a plurality of pad electrodes arranged in series along the lengthwise direction of the anode, by providing a plurality of pads by dividing the conventional strip-shaped cathode in the lengthwise direction. X-direction position detection is carried out using the anodes and Y-direction detection is carried out using the cathodes.

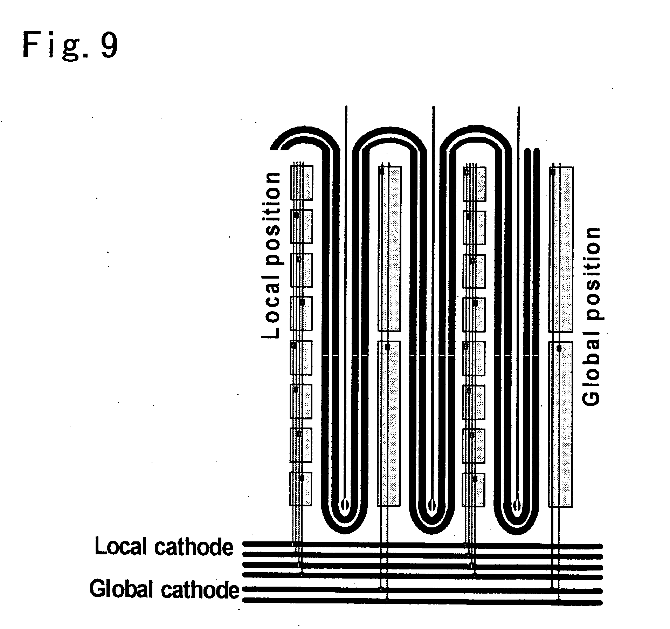

Y-direction position detection using the cathodes will now be described. As shown in Fig. 8, Fig. 9 and Fig. 12, a plurality of pad electrodes are respectively arranged on both sides of the anode in series along the lengthwise direction of the anode, and a cathode is constructed from a pad array comprised of a plurality of pad electrodes. Positive ions generated by electron avalanche arising close to the anode move to respective adjoining cathode pad arrays (pad electrodes). Accordingly, it is possible to acquire the same signals simultaneously at the cathode pad arrays (pad electrodes) of both sides of the anodes.

With respect to the cathode pad arrays arranged on either side of the anode, by roughly or coarsely dividing one cathode the lengthwise direction of the anode every larger dimension, a cathode is comprised of a pad array of a plurality of pad electrodes (global position detection electrodes). By finely dividing the other cathode in the lengthwise direction of the anode every smaller dimension, a cathode is comprised of a pad array of a plurality of pad electrodes (local position detection electrodes).

Described specifically, in an MS plate having, for example, an effective surface area of 102.4 mm x 102.4 mm and an anode pitch of 400 µm, one cathode pad array comprises 16 elongated pad electrodes (dimension in the anode length direction of 6.4 mm). The elongated electrodes constitute global position detection electrodes, and 16 global position detection electrodes are electrically connected to 16 read-out signal lines (6.4 mm/400 µm) respectively. The other cathode pad array comprises shortened pad electrodes of 400 µm length, and the shortened pad electrodes constitute local position detection electrodes. A plurality of local position detection electrodes are periodically electrically connected to 16 read-out signal lines, in an arrangement direction (in a direction of pad array). A series of 16 local position detection electrodes constitute one period. By using read-out signals from the local position detection electrodes, it is possible to determine incident position within global position information. Accordingly, by using global position information and local position information, the number of read-out signal lines, which was required to be 256 conventionally, can be reduced to 32 (16 global position detection signal lines + 16 local position detection signal lines).

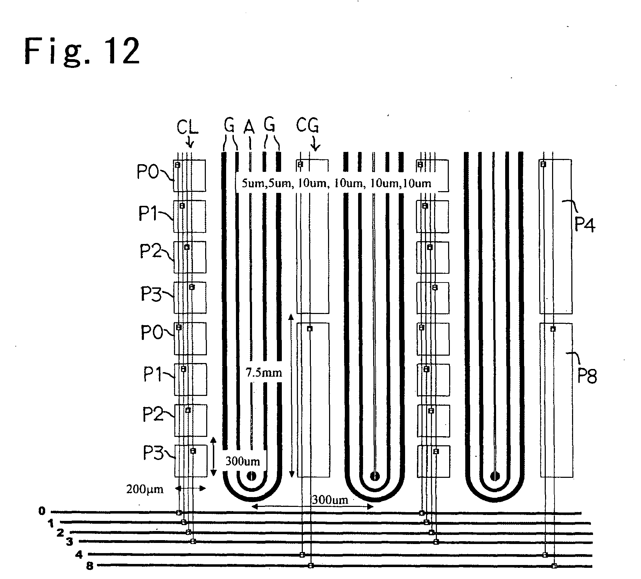

Position determination using global position detection electrodes and local position detection electrodes will be described in more detail based on Fig. 12. In Fig. 12, three (if the number of split anodes is considered 3 x 2 = 6) anode strips A are arranged in parallel with a pitch of 300 µm on a substrate, and a cathode pad array CL and cathode pad array CG are respectively arranged parallel to the anode strip A in the lengthwise direction of the anode strip A on either side to interpose the anode strip A therebetween. Two strip shaped grids G extending parallel to the anode strip A are respectively arranged between the anode strip A and the cathode pad array CL and the anode strip A and the cathode array strip CG.

The cathode pad array CG constitutes global position detection electrodes, and comprises a plurality of elongated pad electrodes P4, P8. The pad electrode P4 is connected to a global position detection read-out signal line 4, and the pad electrode P8 is connected to a global position detection read-out signal line 8. Pad electrodes constituting each pad array for global position detection are divided into a plurality of groups (in the drawing, P4, P8), and pad electrodes belonging to the same group are connected to common signal lines 4, 8.

The cathode pad array CL constitutes local position detection electrodes, and comprises a plurality of shortened pad electrodes. Pad electrodes for local position detection are divided into a plurality of groups, and pad electrodes belonging to the same group are electrically connected to common read-out signal lines. In the drawing, pad electrodes for local position detection are divided into four groups P0, P1, P2 and P3, with the pad electrode P0 being connected to the local position detection read-out signal line 0, the pad electrode P1 connected to the local position detection read-out signal line 1, the pad electrode P2 connected to the local position detection read-out signal line 2, and the pad electrode P3 connected to the local position detection read-out signal line 3. In the drawing, a pad array comprised of the local position detection pad electrodes had a pattern of one period P0, P1, P2, P3, and shortened pad electrodes arranged in series along the lengthwise direction of the anode A are connected to common signal lines every four electrodes (one period).

One period of P0, P1, P2, P3 defined by the local position detection pad array corresponds to the dimension of the global position detection pad electrodes. Accordingly, the Y-direction position of the incident radiation is determined using position information acquired from global position detection electrodes constituting the cathode pad array CG and the local position detection electrode constituting the cathode pad array CL. In Fig. 12, four (the number of electrodes constituting one period, and also the number of pad electrode groups) signal lines are shown arranged below the cathodes (local position detection pad electrodes) but if 25 signal lines can be arranged within a local position detection pad electrode having a width of 200 µm, in a case of 18 cm square, position determination of 25 x 25 (7.5 cm/300 µm) = 625 becomes possible with 50 signal lines.

Technique using the global position information and the local position information can also be applied to X-direction position determination using anodes. According to the present invention, a plurality of split anodes formed by vertically dividing the anode along the lengthwise direction are adopted. Position in a direction orthogonal to the lengthwise direction of the anode is detected using the anode. In the drawing, two split anodes are shown, but the number of split anodes is not limited to 2, and it is also possible to use three split anodes, for example. The plurality of split anodes are positioned within a range of electron cloud, and it is possible to acquire almost the same signals at the same time at the plurality of split anodes. Strictly speaking, slight differences arise in signals acquired at the two split anodes due to the incident particle position, and it may be possible to use this difference to improve position resolution.

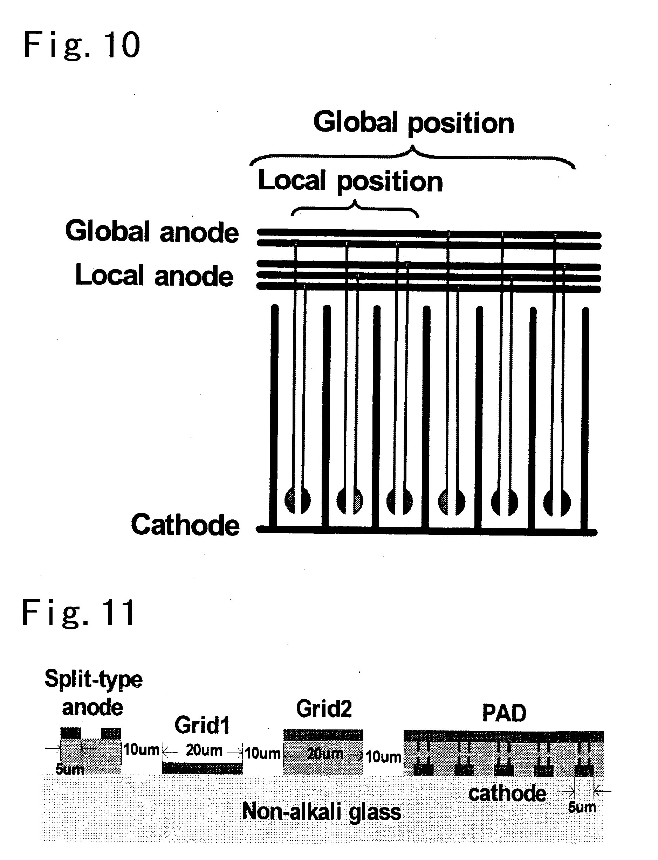

As shown in Fig. 10, the anode strip is an anode set comprised of two split anode strips. One split anode strip constitutes a global position detection electrode, and is connected to a global position read-out signal line. The other split anode strip constitutes a local position detection electrode, and is connected to a local position read-out signal line.

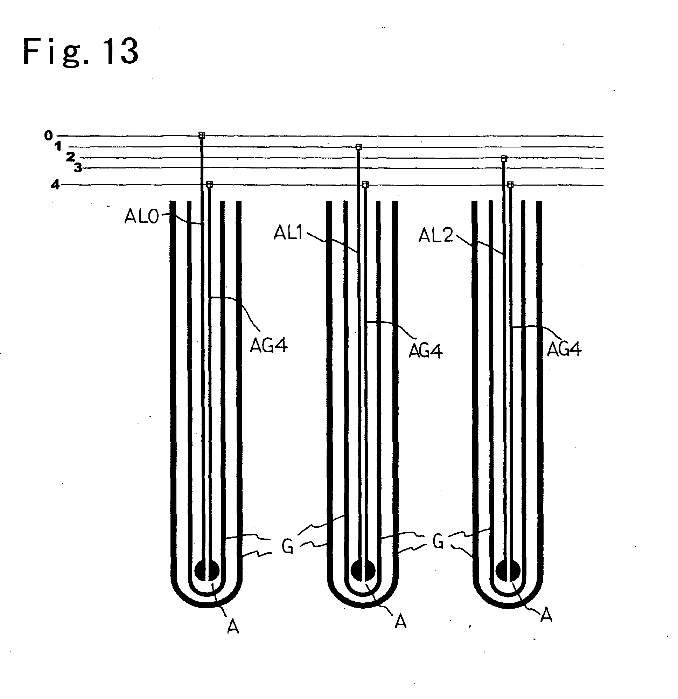

As shown in Fig. 13, the anode strips A comprise global position detection anode strips AG and local position detection anode strips AL. The global position detection anode strips AG4 are connected to a global position read-out signal line 4. The local position detection anode strips AL0 are connected to local position read-out signal line 0, the local position detection anode strips AL1 are connected to local position read-out signal line 1, the local position detection anode strips AL2 are connected to local position read-out signal line 2, and the local position detection anode strips AL3 are connected to local position read-out signal line 3. Only one global position detection signal line 4 is shown in Fig. 13, but actually a plurality of global position detection signal lines are used. Similarly to the description for the cathodes, it is possible to determine an X-direction position of incident radiation from the global position information and the local position information. The magnitude of signals acquired by the respective split anodes is half compared to that acquired by a single anode, but in the case of reading of 25 cm square with a pitch of 400 µm, if a period of 25 lines is set, the number of signal lines required is reduced from 625 to 50.

According to the present invention, the structure of the cathode has the following features. Fig. 11 is a cross sectional view of an MS plate, with two split anodes constituting an anode and a pad electrode constituting a cathode being arranged on a glass substrate with a predetermined distance between them, and two grids arranged between the anode and the cathode. The pad electrode comprises a multi-layered wiring structure comprised of a metal layer as a first layer, an insulating layer beneath the metal layer, and a metal layer (a plurality of signal lines) below the insulating layer. A plurality of pad electrodes constituting the cathode are electrically connected to corresponding specified signal lines respectively. Specifically, as shown in Fig. 12, pad electrodes for local position detection are divided into four groups of P0, P1, P2 and P3, with the pad electrodes P0 being connected to the local position detection read-out signal line 0, the pad electrodes P1 connected to the local position detection read-out signal line 1, the pad electrodes P2 connected to the local position detection read-out signal line 2, and the pad electrodes P3 connected to the local position detection read-out signal line 3. This type of multi-layer wiring structure can be manufactured using known microfabrication technique. In Fig. 8, Fig. 9 and Fig. 13, signal lines are shown extending parallel to the anode through the pad electrodes, but in actual fact these signal lines are arranged at positions on the lower side of the pad electrodes. The signal lines are positioned beneath the electrode surface of the cathode (pad electrode) and extend parallel to each other, which means that the signal lines do not cross the anode strip or the grid. Incidentally, in Fig. 11 the anode and the grid 2 are also provided on the substrate via the insulating layer, but this is only an example, and it is also possible, for example, to arrange the anode and the grid 2 directly on the substrate.

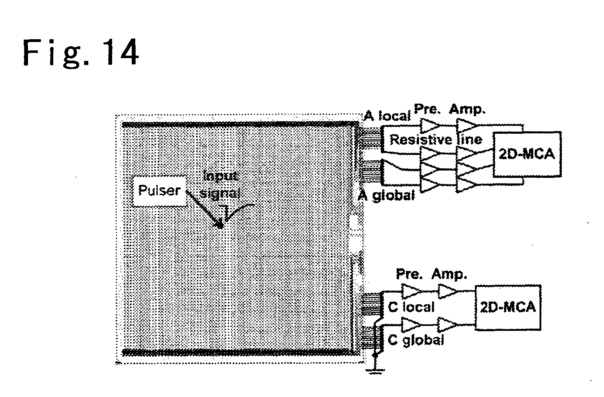

FIG. 14 is a schematic drawing showing a device for two-dimensional position detection of the present invention. A global position detection read-out signal read out from cathode, a local position detection read-out signal read out from cathode, a global position detection read-out signal read out from anode, and a local position detection read-out signal read out from anode are taken out from the MS plate by means of corresponding signal lines, and analyzed by the signal processing section.

The present invention has been described with reference to the drawings, but the present invention is not limited to the structure of the drawings and forgoing description, and the specific dimensions and numbers for each of the structural elements are also example numerical values. In the drawings, the pad electrodes constituting each cathode set all have the same dimensions, but it is also possible to use pad electrodes with different dimensions within the same set. For example, by setting the dimensions of pad electrodes positioned towards the edge of the plate small, it is possible to cope with image distortion effects at the end of the detection site.

### [D] Position detection using cathodes

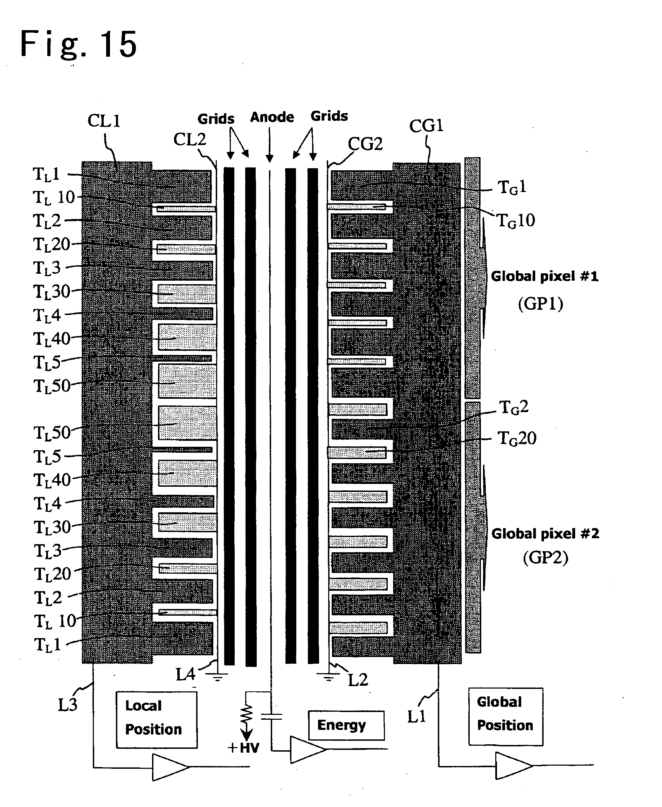

Position detection using only the cathodes will now be described. Fig. 15 is a partial plan view of an MS plate constituting an MS tube, and the MS plate comprises a substrate, an anode provided on the substrate, and cathodes arranged on both sides of the anode. Grids are arranged between the anode and the cathodes. Global position is detected from the cathode at the right side of the anode, and local position is detected from the cathode at the left side of the anode. Each cathode is electrically divided into two sections.

The cathode for detecting global position comprises electrically divided comb-shaped first section CG1 and comb-shaped second section CG2. The first section CG1 and the second section CG2 respectively comprises a plurality of rectangular teeth TG1, TG2, TG10, TG20, with the teeth TG1 and TG2 of the first section CG1 and the teeth TG10 and TG20 of the second section CG2 being arranged meshing with each other via an insulating section (substrate), and the teeth TG1, TG2 of the first section CG1 and the teeth TG10, TG20 of the second section CG2 arranged in series alternately in the lengthwise direction of the anode. Each tooth TG1, TG2 of the first section CG1 and each tooth TG10, TG20 of the second section CG2 arranged adjacently in the meshed state form a pair, and global position detection electrodes for determining global position GP1, GP2 comprise a plurality of teeth pairs.

The global positions GP1, GP2 are determined using surface area ratio of the teeth TG1, TG2 of the first section CG1 and the teeth TG10, TG20 of the second section CG2 of each pair constituting the global position detection electrodes. In the case where one global position detection electrode comprises a plurality of pairs, the surface area ratios of the teeth TG1, TG2 of the first section CG1 and the teeth TG10, TG20 of the second section CG2 of respective pairs constituting the global position detection electrode are the same. Therefore, by making the surface area ratios of the teeth TG1, TG2 of the first section CG1 and the teeth TG10, TG20 of the second section CG2 of each pair different for every pair of teeth constituting different global position detection electrodes, it is possible to uniquely determine each global position GP1, GP2. The teeth TG1, TG2 of the first section CG1 and the teeth TG10, TG20 of the second section CG2 respectively have the same width dimension (dimension in the direction orthogonal to the lengthwise direction of the anode), and surface area ratio of the teeth is determined by the lengthwise dimension (dimension in the lengthwise direction of the anode). A global electrode corresponding to global position GP1 is formed by alternately arranging six teeth TG1 of the first section CG1 and five teeth TG10 of the second section CG2 in the lengthwise direction of the anode, but the six teeth TG1 of the first section CG1 and the five teeth TG10 of the second section CG2 respectively have the same lengthwise dimensions. A global position detection electrode corresponding to global position GP2 is formed by alternately arranging six teeth TG2 of the first section CG1 and six teeth TG20 of the second section CG2 in the lengthwise direction of the anode, but the six teeth TG2 of the first section CG1 and the six teeth TG20 of the second section CG2 respectively have the same lengthwise dimensions, and such dimensions are different from the dimensions for the teeth TG1 of the first section CG1 and the teeth TG10 of the second section CG2 constituting the global position detection electrode corresponding to global position GP1.

The first section CG1 is connected to a lead line L1, while the second section CG2 is connected to a lead line L2. The global positions GP1, GP2 are detected using a charge division method based on surface area ratio of the teeth TG1, TG2 of the first section CG1 and the teeth TG10, TG20 of the second section CG2 constituting each teeth pair. Global positions GP1, GP2 are detected from signal obtained from the lead line L1 constituting a signal read-out line, and the lead line L2 is grounded. If the charge before division is known, a ratio of charges divided between the teeth TG1 and TG2 of the first section CG1 and the teeth TG10 and TG20 of the second section CG2 of one pair can be calculated from a signal read out from either one of the teeth. It is also possible to not ground lead line L2 and read out signals from lead line L2.

The cathode for detecting local position comprises electrically divided comb-shaped first section CL1 and comb-shaped second section CL2. The first section CL1 and second section CL2 respectively comprise a plurality of rectangular teeth TL1, TL2, TL3, TL4, TL5, TL10, TL20, TL30, TL40, and TL50, with teeth TL1, TL2, TL3, TL4 and TL5 of the first section CL1 and teeth TL10, TL20, TL30, TL40 and TL50 of the second section CL2 being arranged meshed with each other via the insulating section (substrate), and with teeth TL1, TL2, TL3, TL4 and TL5 of the first section CL1 and teeth TL10, TL20, TL30, TL40 and TL50 of the second section CL2 being arranged in series alternately in a lengthwise direction of the anode. Each pair formed from the teeth TL1, TL2, TL3, TL4 and TL5 of the first section CL1 and teeth TL10, TL20, TL30, TL40 and TL50 of the second section CL2 that are adjacent to each other constitutes a local position detection electrode for determining respective local positions. Local position is determined using surface area ratios of the teeth TL1, TL2, TL3, TL4 and TL5 of the first section CL1 and teeth TL10, TL20, TL30, TL40 and TL50 of the second section CL2 of each pair constituting local position detection electrodes. A plurality of local position detection electrodes, namely a plurality of teeth pairs, correspond to one global position GP1, GP2, and by making surface area ratios of the teeth TL1, TL2, TL3, TL4 and TL5 of the first section CL1 and teeth TL10, TL20, TL30, TL40 and TL50 of the second section CL2 of a plurality of pairs corresponding to one global position different in each pair, local position is determined within each global position GP1, GP1. Surface area ratios of teeth of each pair for determining local position are configured so as to gradually increase or decrease along a global position (along the lengthwise direction of the anode within the global position). Specifically, the surface area ratio of the teeth TL1 of the first section CL1 and the teeth TL10 of the second section CL2, the surface area ratio of the teeth TL10 of the second section CL2 and the teeth TL2 of the first section CL1, the surface area ratio of the teeth TL2 of the first section CL1 and the teeth TL20 of the second section CL1, the surface area ratio of the teeth TL20 of the second section CL2 and the teeth TL3 of the first section CL1, the surface area ratio of the teeth TL3 of the first section CL1 and the teeth TL30 of the second section CL2, the surface area ratio of the teeth TL2-30 of the second section CL2 and the teeth TL4 of the first section CL1, the surface area ratio of the teeth TL4 of the first section CL1 and the teeth TL40 of the second section CL2, the surface area ratio of the teeth TL40 of the second section CL2 and the teeth TL5 of the first section CL1, and the surface area ratio of the teeth TL5 of the first section CL1 and the teeth TL50 of the second section CL2 are configured to change gradually along the lengthwise direction of the anode within a global position.

The first section CL1 is connected to a lead line L3, while the second section CL2 is connected to a lead line L4. Local position is detected using a charge division method based on surface area ratios of the teeth TL1, TL2, TL3, TL4 and TL5 of the first section CL1 and teeth TL10, TL20, TL30, TL40 and TL50 of the second section CL2 constituting a pair of teeth. Local position is detected from a signal obtained from the lead line L3 constituting a signal read-out line, and the lead line L4 is grounded. If the overall charge is known, a ratio of charges divided between the teeth TL1, TL2, TL3, TL4 and TL5 of the first section CL1 and the teeth TL10, TL20, TL30, TL40 and TL50 of the second section CL2 for one pair can be calculated from a signal read out from either one of the teeth. It is also possible to not ground lead line L4 and read out signals from lead line L4.

The principal behind the particle one-dimensional position information acquisition method using the MS tube will be described based on Fig. 15. Charge generated at the anode is divided in two, and directed to cathodes positioned at either side of the anode, and simultaneously substantially the same magnitude of charge is acquired at the cathode to the right of the anode and the cathode to the left of the anode. Global positions GP1, GP2 are determined using the right side cathode, while local position is determined using the left side cathode. Positive ions going towards the cathode spread out during movement which means that by dividing the right side cathode into two sections CG1, CG2, and changing the surface areas of each split section according to global position, the global positions GP1, GP2 are identified from ratio of charge appearing at the first section CG1 and the second section CG2. Further, by dividing the left side cathode into two sections CL1, CL2, and periodically changing the surface areas of each split section along the global position (lengthwise direction of the anode), the local position is identified from ratio of charge appearing at the first section CL1 and the second section CL2. In Fig. 15, two sets of a predetermined number of teeth pairs corresponding to one global position define one period (here, in one period, surface area ratios of a teeth pair gradually increase (decrease) within one global position, while gradually decreasing (increasing) in the other global position), and the two sets of a predetermined number of teeth pairs defining one period are repeatedly arranged corresponding to two adjacent global positions.

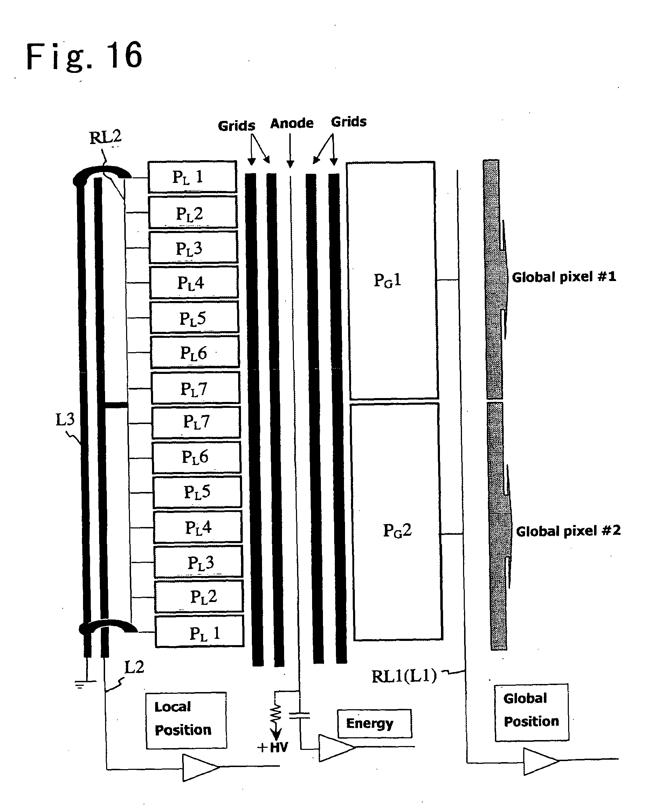

Another embodiment of position detection using only the cathodes will now be described. Fig. 16 is a partial plan view of an MS plate constituting an MS tube, and the MPS plate has a substrate, an anode provided on the substrate, and cathodes arranged on both sides of the anode. Grids are arranged between the anode and the cathodes. Global position is detected from the cathode at the right side of the anode, and local position is detected from the cathode at the left side of the anode.

The right side cathode is a pad array comprised of a plurality of elongated pad electrodes PG1, PG2, ... arranged in series along a lengthwise direction of the anode. The plurality of elongated pad electrodes PG1, PG2, ... are formed by dividing the cathode in the lengthwise direction every predetermined distance. The dimensions of each elongated pad electrode PG1, PG2, ... correspond to a global position, and each elongated pad electrode PG1, PG2, ... constitutes a global position detection electrode. Each elongated pad electrode PG1, PG2, ... has the same dimensions and is connected to a common resistance line RL1 (L1) extending parallel to the anode, and global position is determined using a charge division method from a signal read out from the resistance line RL1 (L1).

The left side cathode is a pad array comprised of a plurality of shortened pad electrodes PL1, PL2, P13, PL4, PL5, PL6, PL7 arranged in series along a lengthwise direction of the anode. The plurality of shortened pad electrodes PL1, PL2, P13, PL4, PL5, PL6, PL7 are formed by dividing the cathode in a lengthwise direction every predetermined distance. Dimensions of the shortened pad electrodes PL1, PL2, PL3, PL4, PL5, PL6, PL7 correspond to local position, and each shortened pad electrode PL1, PL2, P13, PL4, PL5, PL6, PL7 constitutes a local position detection electrode. The shortened pad electrodes PL1, PL2, P13, PL4, PL5, PL6, PL7 have the same dimensions, and the same number of shortened pad electrodes correspond to each elongated pad electrode PG1, PG2,.... A plurality of shortened pad electrodes PL1, PL2, PL3, PL4, PL5, PL6 and PL7 corresponding to one global position are connected to a common resistance line RL2 extending parallel to the anode. The resistance line RL2 is connected to a read-out line L2, and local position is determined using a charge division method from a signal read out from the readout line L2. In Fig. 16, seven shortened pad electrodes PL1, PL2, PL3, PL4, PL5, PL6, PL7 (local position detection electrodes) are arranged corresponding to one elongated pad electrode (global position detection electrode), 14 shortened electrode pads PL1, PL2, PL3, PL4, PL5, PL6; PL7, PL7, PL6, PL5, PL4, PL3, PL2, PL1 corresponding to two elongated pad electrodes PG1, PG2 are connected to a common resistance line RL2 extending parallel to the anode, both ends of the resistance line RL2 are grounded. By connecting a central location in the lengthwise direction of resistance line RL2 to signal line L2 and grounding the two ends of the resistance line RL2 via a lead line L3, and local position is determined using a charge division method from a signal read out from the resistance line RL2. In Fig. 16, a group of shortened pad electrodes corresponding to two global positions are connected to a common resistance line RL2 as one period, and a tap is taken and connected to a common read out signal line L2, but it is also possible to connect a group of shortened electrode pads corresponding to one global position as one period.

Description has been given based on one-dimensional detection for determining global position and local position from only cathodes, but it is also possible to apply this to two-dimensional detection. For example, it is also possible to perform two-dimensional position detection by arranging a plurality elongated one-dimensional position detection units comprised of one or more electrode groups (a set of anode and cathode) in a direction orthogonal to a lengthwise direction of the one-dimensional position detection units. It is also possible to construct a large scale two-dimensional position detector by arranging a plurality elongated one-dimensional position detection units. Description has been given of position detection from cathodes only, but it is also possible for this detection means to be combined with other known detection means, for example, it is also possible to simultaneously detect a signal from an anode.

### INDUSTRIAL APPLICABILITY

The present invention can be widely applied to detection of particles such as radiation (X-rays, γ-rays, β-rays, neutrons, protons etc.), photons, ions etc. As radiation detectors adopting the present invention, examples are MSGC, APD, PMT, MCP. Further, the present invention can be applied to devices utilizing detection of particles, and examples of this type of device are X-ray CT devices and PET devices, electron microscope instruments, other image processing devices and imaging systems.

## Claims

1. A particle detector for detecting position of particles, comprising electrodes for detecting position of particles,
said electrodes comprising:
one or more global position detection electrodes for detecting global position of particles; and
a plurality of local position detection electrodes for detecting local position of particles,
wherein the local position within the global position is determined by using the global position detected by said global position detection electrodes and the local position detected by said local position detection electrodes.

2. The detector of claim 1, wherein said plurality of local position detection electrodes are divided into a plurality of groups, and local position detection electrodes belonging to respective groups are connected to common signal lines.

3. The detector of claim 2, wherein a predetermined number of local position detection electrodes correspond to one global position and each electrode of said predetermined number of local position detection electrodes corresponding to one global position belongs to respective different groups.

4. The detector of claim 3, wherein said predetermined number of local position detection electrodes define one period, and said predetermined number of local position detection electrodes defining one period are repeatedly arranged corresponding to the global position.

5. The detector of any one of claims 1 to 4, wherein said plurality of local position detection electrodes and/or said one or more global position detection electrodes comprise a plurality of pad electrodes.

6. The detector of claim 5, wherein the local position detection electrode is a cathode and the cathode comprises a plurality of local position detection pad electrodes.

7. The detector of claim 6, said particle detector comprises an elongated anode, and said plurality of pad electrodes form an array of pads arranged in series along a lengthwise direction of the anode.

8. The detector of claim 7, wherein the pad arrays are arranged on both sides of the anode,
one pad array comprises a plurality of shortened pad electrodes,
the other pad array comprises a plurality of elongated pad electrodes,
at least said shortened pad electrodes of said one pad array constitute local position detection electrodes,
said shortened pad electrodes constituting the local position detection electrodes are divided into a plurality of groups, and shortened pad electrodes belonging to the same group are connected to respective common signal read lines.

9. The detector of claim 8, wherein the pad electrodes forming pad arrays arranged on both sides of the anode constitute local position detection electrodes.

10. The detector of claim 8, wherein pad electrodes of said one pad array constitute local position detection electrodes, and pad electrodes of said other pad array constitute global position detection electrodes.

11. The detector of claim 10, wherein said plurality of shortened pad electrodes of the pad array constituting the local position detection electrodes are arranged periodically along the lengthwise direction of the anode, and the size of one period corresponds to the size of one elongated pad electrode constituting the global position detection electrode.

12. The detector of any one of claims 1 to 11, wherein the global position is acquired using a charge division method.

13. The detector of claim 12, wherein the global position detection electrode is an anode.

14. The detector of claim 1, wherein said electrodes comprises at least one anode and cathodes provided at both sides of said anode, one cathode comprises global position detection electrodes, and the other cathode comprises local position detection electrodes.

15. The detector of claim 14, wherein the one cathode comprises a plurality of elongated pad electrodes constituting global position detection electrodes, the other cathode comprise a plurality of shortened pad electrodes constituting local position detection electrodes, and a predetermined number of shortened pad electrodes correspond to one elongated pad electrode.

16. The detector of claim 15, wherein each of said predetermined number of shortened pad electrodes corresponding to one elongated pad electrode belongs to respective different groups, shortened pad electrodes belonging to the same group are connected to respective common signal lines, said plurality of elongated pad electrodes are divided into a plurality of groups, and elongated pad electrodes belonging to the same group are connected to respective common signal lines.

17. The detector of claim 15, wherein said plurality of elongated pads have the same dimension and are connected to a common resistance line so as to determine global position using a charge division method, and said predetermined number of shortened pad electrodes corresponding to one elongated pad electrode have the same dimension and are connected to a common resistance line so as to determine local position using a charge division method.

18. The detector of claim 17, two sets of said predetermined number of shortened pad electrodes corresponding to adjacent two elongated pad electrodes are connected to a common resistance line.

19. The detector of claim 14, wherein each cathode is electrically divided into a first section and a second section each having a plurality of teeth, teeth of the first section and teeth of the second section are arranged in the meshed state in series alternately in a lengthwise direction of the anode, and local position and global position are respectively determined using a charge division method based on surface area ratio between adjacent first section tooth and second section tooth.

20. The detector of claim 19, wherein said adjacent first section tooth and second section tooth constitute a pair of teeth, a global position detection electrode comprises a plurality of teeth pairs, each teeth pair of the same global position have the same surface area ratio, and teeth pairs of different global positions have respective different surface area ratios.

21. The detector of claim 19 or 20, wherein said adjacent first section tooth and second section tooth constitute a pair of teeth, a local position detection electrode comprises a teeth pair, a predetermined number of teeth pairs correspond to one global position, and said predetermined number of teeth pairs corresponding to one global position have respective different surface area ratios.

22. The detector of claim 21, wherein surface area ratios of said predetermined number of teeth pairs corresponding to one global position are configured to gradually increase or decrease along a lengthwise direction of the anode within the global position.

23. The detector of claim 21 or 22, wherein said predetermined number of teeth pairs define one period, and said predetermined number of teeth pairs defining one period are repeatedly arranged corresponding to a global position along a lengthwise direction of the anode.

24. The detector of claim 21 or 22, wherein two sets of said predetermined number of teeth pairs define one period, and said two sets of said predetermined number of teeth pairs defining one period are repeatedly arranged corresponding to adjacent two global positions along a lengthwise direction of the anode.

25. The detector of any one of claims 1 to 24, wherein said electrodes for detecting position of particles comprise a plurality of elongated electrodes,
said plurality of elongated electrodes are arranged parallel to each other so as to detect position in a direction orthogonal to an lengthwise direction of the elongated electrodes,
each elongated electrode of said plurality of elongated electrodes further comprises a set of a plurality of fine electrodes, said plurality of fine electrodes acquire the same signals at the same time,
at least one fine electrode of the set of fine electrodes constitutes a global position detection electrode, and
at least one fine electrode of the set of fine electrodes constitute a local position detection electrode.

26. The detector of claim 25, wherein the elongated electrodes are anodes, and each anode comprises a plurality of split anodes extending parallel and adjacent to each other, at least one of said plurality of split anodes constitutes a global position detection electrode, and at least one of said plurality of split anodes constitutes a local position detection electrode.

27. The detector of any one of claims 1 to 26, said detector comprising alternately arranged cathodes and anodes.

28. The detector of any one of claims 1 to 27, said detector is a microstrip gas chamber.

29. The detector of any one of claims 1 to 28, wherein said electrodes for detecting position of particles comprise a multi-layered wiring structure comprising one or more metallic layers constituting electrodes, an insulation layer below said one or more metallic layers, and a metallic wiring layer below said insulation layer, said metallic wiring layer comprises a plurality of read-out signal lines, and said one or more metallic layers constituting the electrodes are electrically connected to selected read-out signal lines.

30. The detector of claim 29, wherein said electrodes are local position detection electrodes.

31. The detector of claim 30, wherein said local position detection electrodes are cathodes, and said one or more metallic layers constituting electrodes are pad electrodes.

32. A method of detecting position of particles using electrodes,
providing electrodes comprising one or more global position detection electrodes for detecting global position of particles and a plurality of local position detection electrodes for detecting local position of particles; and
determining the local position within the global position by the global position detected from said global position detection electrodes and the local position detected from said local position detection electrodes.

33. The method of claim 32, wherein said plurality of local position detection electrodes are divided into a plurality of groups, and local position detection electrodes belonging to respective groups are connected to common signal lines such that signals obtained by local position detection electrodes belonging to respective groups are read out via said common signal lines.

34. The method of claim 33, wherein a predetermined number of local position detection electrodes correspond to one global position and each electrode of said predetermined number of local position detection electrodes corresponding to one global position belongs to respective different groups.

35. The method of claim 34, wherein said predetermined number of local position detection electrodes define one period, and said predetermined number of local position detection electrodes defining one period are repeatedly arranged corresponding to global positions.

36. The method of any one of claims 32 to 35, wherein said plurality of local position detection electrodes and/or said one or more global position detection electrodes comprise a plurality of pad electrodes.

37. The method of claim 36, wherein the local position detection electrode is a cathode and the cathode comprises a plurality of local position detection pad electrodes.

38. The method of claim 37, said particle detector comprises an elongated anode, and said plurality of pad electrodes form an array of pads arranged in series along a lengthwise direction of the anode.

39. The method of claim 38, wherein the pad arrays are arranged on both sides of the anode,
one pad array comprises a plurality of shortened pad electrodes,
the other pad array comprises a plurality of elongated pad electrodes,
at least said shortened pad electrodes of said one pad array constitute local position detection electrodes,
said shortened pad electrodes constituting the local position detection electrodes are divided into a plurality of groups, and shortened pad electrodes belonging to the same group are connected to respective common signal read lines.

40. The method of claim 39, wherein the pad electrodes forming pad arrays arranged on both sides of the anode constitute local position detection electrodes.

41. The method of claim 39, wherein pad electrodes of said one pad array constitute local position detection electrodes, and pad electrode of said other pad array constitute global position detection electrodes.

42. The method of claim 41, wherein said plurality of shortened pad electrodes of the pad array constituting the local position detection electrodes are arranged periodically along the lengthwise direction of the anode, and the size of one period corresponds to the size of one elongated pad electrode constituting the global position detection electrode.

43. The method of any one of claims 32 to 42, wherein the global position is acquired using a charge division method.

44. The method of claim 43, wherein the global position detection electrode is an anode.

45. The method of claim 32, wherein said electrodes comprises at least one anode and cathodes provided at both sides of said anode, one cathode comprises global position detection electrodes, and the other cathode comprises local position detection electrodes.

46. The method of claim 45, wherein the one cathode comprises a plurality of elongated pad electrodes constituting global position detection electrodes, the other cathode comprise a plurality of shortened pad electrodes constituting local position detection electrodes, and a predetermined number of shortened pad electrodes correspond to one elongated pad electrode.

47. The method of claim 46, wherein each of said predetermined number of shortened pad electrodes corresponding to one elongated pad electrode belongs to respective different groups, shortened pad electrodes belonging to the same group are connected to respective common signal lines, said plurality of elongated pad electrodes are divided into a plurality of groups, and elongated pad electrodes belonging to the same group are connected to respective common signal lines.

48. The method of claim 46, wherein said plurality of elongated pads have the same dimension and are connected to a common resistance line so as to determine global position using a charge division method, and said predetermined number of shortened pad electrodes corresponding to one elongated pad electrode have the same dimension and are connected to a common resistance line so as to determine local position using a charge division method.

49. The method of claim 48, two sets of said predetermined number of shortened pad electrodes corresponding to adjacent two elongated pad electrodes are connected to a common resistance line.

50. The method of claim 45, wherein each cathode is electrically divided into a first section and a second section each having a plurality of teeth, teeth of the first section and teeth of the second section are arranged in the meshed state in series alternately in a lengthwise direction of the anode, and local position and global position are respectively determined using a charge division method based on surface area ratio between adjacent first section tooth and second section tooth.

51. The method of claim 50, wherein said adjacent first section tooth and second section tooth constitute a pair of teeth, one global position detection electrode comprises a plurality of teeth pairs, each teeth pair of the same global position have the same surface area ratio, and teeth pairs of different global positions have respective different surface area ratios.

52. The method of claim 50 or 51, wherein said adjacent first section tooth and second section tooth constitute a pair of teeth, a local position detection electrode comprises a teeth pair, a predetermined number of teeth pairs correspond to one global position, and said predetermined number of teeth pairs corresponding to one global positions have respective different surface area ratios.

53. The method of claim 52, wherein surface area ratios of said predetermined number of teeth pairs corresponding to one global position are configured to gradually increase or decrease along a lengthwise direction of the anode within the global position.

54. The method of claim 52 or 53, wherein said predetermined number of teeth pairs define one period, and said predetermined number of teeth pairs defining one period are repeatedly arranged corresponding to a global position along a lengthwise direction of the anode.

55. The method of claim 52 or 53, wherein two sets of said predetermined number of teeth pairs define one period, and said two sets of said predetermined number of teeth pairs defining one period are repeatedly arranged corresponding to adjacent two global positions along a lengthwise direction of the anode.

56. The method of any one of claims 32 to 55, wherein said electrodes for detecting position of particles comprise a plurality of elongated electrodes,
said plurality of elongated electrodes are arranged parallel to each other so as to detect position in a direction orthogonal to an lengthwise direction of the elongated electrodes,
each elongated electrode of said plurality of elongated electrodes further comprises a set of a plurality of fine electrodes, said plurality of fine electrodes acquire the same signals at the same time,
at least one fine electrode of the set of fine electrodes constitutes a global position detection electrode, and
at least one fine electrode of the set of fine electrodes constitute a local position detection electrode.

57. The method of claim 56, wherein the elongated electrodes are anodes, and each anode comprises a plurality of split anodes extending parallel and adjacent to each other, at least one of said plurality of split anodes constitutes a global position detection electrode, and at least one of said plurality of split anodes constitutes a local position detection electrode.

58. The method of any one of claims 32 to 57, said detector comprising alternately arranged cathodes and anodes.

59. A microstrip gas chamber comprising:
a gas volume;
an electrically insulating substrate provided with a surface facing the gas volume;
cathodes and anodes alternately arranged on the surface of the substrate; and
a high voltage source for creating a potential difference between the cathodes and the anodes,
wherein said cathodes arranged on both sides of the anode are pad arrays comprising a plurality of pad electrodes arranged along a lengthwise direction of the anodes,
one of the pad arrays comprises a plurality of elongated pad electrodes and each elongated pad electrode is connected to a read signal line,
the other of the pad arrays comprises a plurality of shortened pad electrodes and said plurality of shortened pad electrodes are divided into a plurality of groups, with pad electrodes belonging to the same group being connected to respective common read signal lines, and
position of particles is determined from signals read out by the elongated pad electrodes and the shortened pad electrodes.

60. The microstrip gas chamber of claim 59, said plurality of elongated pad electrodes forming one pad array are respectively connected to independent read signal lines.

61. The microstrip gas chamber of claim 60, wherein said plurality of elongated pad electrodes forming each pad array are divided into a plurality of groups, and elongated pad electrodes belonging to the same groups are connected to common signal lines.

62. The microstrip gas chamber of any one of claims 59 to 61, wherein said anodes are connected to read signal lines such that said anodes detect position of particles in a direction of cathodes, and one dimensional position of particle is determined by signals read out from at least either of said elongated pad electrodes and said shortened pad electrodes and signals read out from said anode.

63. The microstrip gas chamber of any one of claims 59 to 62, wherein said anodes are connected to read signal lines such that said anodes detect position of particles in a direction crossing cathodes, and two dimensional position of particle is determined by signals read out from said elongated pad electrodes and said shortened pad electrodes and signals read out from said anode.

64. A microstrip gas chamber comprising:
a gas volume;
an electrically insulating substrate provided with a surface facing the gas volume;
cathodes and anodes alternately arranged on the surface of the substrate; and
a high voltage source for creating a potential difference between the cathodes and the anodes,
wherein each anode is an anode set comprising a plurality of fine anodes extending parallel and adjacent to each other, said anode set is adapted to detect position in a direction orthogonal to an lengthwise direction of the anode,
at least one fme anode of said plurality of fine anodes of respective anode sets is divided into a plurality of groups, fine anodes belonging to the same group are connected to respective common local position read signal lines,
at least one fine electrode of said plurality of fine anodes of respective anode sets is connected to a common global position read signal line,
and position of incident particles is determined using read signals acquired from the local position read signal line and the global position read signal line.

65. The microstrip gas chamber of claim 64, wherein fine anodes of respective anode sets for determining the global position are divided into a plurality of groups, fine anodes belonging to the same group are connected to respective common local position read signal lines.

66. A microstrip gas chamber comprising:
a gas volume;
an electrically insulating substrate provided with a surface facing the gas volume;
at least one anode provided on said surface of the substrate;
cathodes provided at both sides of said anode; and
a high voltage source for creating a potential difference between the cathodes and the anodes,
wherein one cathode on one side of said anode constitutes a global position detection electrode,
the other cathode on the other side of said anode constitutes a local position detection electrode,
the local position within the global position is determined by using the global position detected by said global position detection electrodes and the local position detected by said local position detection electrodes.

67. The microstrip gas chamber of claim 66, wherein said one cathode comprises a plurality of elongated pad electrodes constituting global position detection electrodes, said other cathode comprise a plurality of shortened pad electrodes constituting local position detection electrodes, and a predetermined number of shortened pad electrodes correspond to one elongated pad electrode.

68. The microstrip gas chamber of claim 67, wherein each of said predetermined number of shortened pad electrodes corresponding to one elongated pad electrode belongs to respective different groups, shortened pad electrodes belonging to the same group are connected to respective common signal lines, said plurality of elongated pad electrodes are divided into a plurality of groups, and elongated pad electrodes belonging to the same group are connected to respective common signal lines.

69. The microstrip gas chamber of claim 67, wherein said plurality of elongated pads have the same dimension and are connected to a common resistance line so as to determine global position using a charge division method, and said predetermined number of shortened pad electrodes corresponding to one elongated pad electrode have the same dimension and are connected to a common resistance line so as to determine local position using a charge division method.

70. The microstrip gas chamber of claim 69, two sets of said predetermined number of shortened pad electrodes corresponding to adjacent two elongated pad electrodes are connected to a common resistance line.

71. The microstrip gas chamber of claim 66, wherein each cathode is electrically divided into a first section and a second section each having a plurality of teeth, teeth of the first section and teeth of the second section are arranged in the meshed state in series alternately in a lengthwise direction of the anode, and local position and global position are respectively determined using a charge division method based on surface area ratio between adjacent first section tooth and second section tooth.

72. The microstrip gas chamber of claim 71, wherein said adjacent first section tooth and second section tooth constitute a pair of teeth, a global position detection electrode comprises a plurality of teeth pairs, each teeth pair of the same global position have the same surface area ratio, and teeth pairs of different global positions have respective different surface area ratios.

73. The microstrip gas chamber of claim 71 or 72, wherein said adjacent first section tooth and second section tooth constitute a pair of teeth, a local position detection electrode comprises a teeth pair, a predetermined number of teeth pairs correspond to one global position, and said predetermined number of teeth pairs corresponding to one global positions have respective different surface area ratios.

74. The microstrip gas chamber of claim 73, wherein surface area ratios of said predetermined number of teeth pairs corresponding to one global position are configured to gradually increase or decrease along a lengthwise direction of the anode within the global position.

75. The microstrip gas chamber of claim 73 or 74, wherein said predetermined number of teeth pairs define one period, and said predetermined number of teeth pairs defining one period are repeatedly arranged corresponding to a global position along a lengthwise direction of the anode.

76. The microstrip gas chamber of claim 73 or 74, wherein two sets of said predetermined number of teeth pairs define one period, and said two sets of said predetermined number of teeth pairs defining one period are repeatedly arranged corresponding to adjacent two global positions along a lengthwise direction of the anode.
